# EUROPÄISCHE PATENTSCHRIFT

(11) **EP 2 327 326 B1**
(45) Veröffentlichungstag und Bekanntmachung des Hinweises auf die Patenterteilung: **14.03.2018**
(21) Anmeldenummer: 10013491.5
(22) Anmeldetag: 11.10.2010
(51) Int. Cl.: A45C 11/18, F16B 5/06, A45F 5/00, A45C 1/06

(54) **Kartenhalter**
Card holder
Porte-cartes

(30) Priorität: 27.11.2009 DE 102009055964
(43) Veröffentlichungstag der Anmeldung: 01.06.2011
(73) Patentinhaber: "Durable" Hunke & Jochheim GmbH & Co. Kommanditgesellschaft, 58636 Iserlohn (DE)
(72) Erfinder: Maier-Hunke, Horst-Werner, 58640 Iserlohn (DE)
(74) Vertreter: Beckord & Niedlich Patentanwälte PartG mbB

(56) Entgegenhaltungen:
- DE-A1- 3 924 706
- DE-C1- 19 824 936
- US-A1- 2002 074 246
- US-A1- 2004 169 056
- US-B1- 6 490 893

## Beschreibung

Die Erfindung betrifft einen Kartenhalter umfassend eine Hülle aus wenigstens zwei Seitenwandelementen, die wenigstens einen Aufnahmeschacht mit einer entgegen einer Einschubrichtung weisenden Aufnahmeöffnung zur Aufnahme wenigstens eines kartenförmigen Informationsträgers in Einschubrichtung begrenzen, wobei eine sich über nicht mehr als zwei Kanten der Hülle erstreckende Halteklammer vorgesehen ist, die mit der Hülle verrastet ist.

Kartenhalter der oben genannten Art sind beispielsweise aus der US 2004/0169056 A1 bekannt. Einen Kartenhalter mit zwei durch Kleben oder Schweißen verbundenen Seitenwänden offenbart die EP 0 210 558 A2. Die von den Seitenwänden gebildete Hülle ist mit einem Befestigungselement in Form einer Lasche versehen. Die Hülle weist einen Vorsprung auf, der mit einem sich verbreiternden Kopf versehen ist, der zur Befestigung der Lasche in eine Öffnung der Lasche eingeführt werden kann.

Ein Nachteil der aus dem Stand der Technik bekannten Kartenhalter ist, dass die Herstellung von Varianten, insbesondere von durch Spritzgießen hergestellten Kartenhaltern mit unterschiedlich ausgestalteten Befestigungselementen oder mit unterschiedlich dimensionierten Aufnahmeschächten, hohe Herstellkosten zur Folge hat. So ist das Verbinden der Seitenwandelemente durch Kleben oder Schweißen mit einem relativ hohen Fertigungsaufwand verbunden, während bekannte formschlüssige Verbindungen einen hohen Materialaufwand zur Folge haben.

Folglich liegt der Erfindung die Aufgabe zugrunde, einen Kartenhalter zu schaffen, dessen Herstellkosten verringert sind.

Diese Aufgabe wird erfindungsgemäß für einen Kartenhalter der eingangs genannten Art dadurch gelöst, dass die Halteklammer winkel- oder Y-förmig ausgestaltet ist und ein Eck der Hülle an beiden an das Eck angrenzenden Kanten überlappt.

Die erfindungsgemäße Halteklammer kann mit geringem Materialaufwand hergestellt werden und erlaubt eine einfache und kostengünstige Erstellung von Varianten, indem unterschiedlich ausgestaltete Hüllen mit gleichartig ausgestalteten Halteklammern oder unterschiedlich ausgestaltete Halteklammern mit gleichartig ausgestalteten Hüllen kombiniert werden.

Der erfindungsgemäße Kartenhalter kann durch verschiedene, voneinander unabhängige, jeweils für sich vorteilhafte Ausgestaltungen weiterentwickelt werden. Auf diese Ausgestaltungen und die mit den Ausgestaltungen jeweils verbundenen Vorteile wird im Folgenden kurz eingegangen.

Gemäß einer ersten vorteilhaften Ausgestaltung kann sich die Halteklammer Ober ein Eck der Hülle erstrecken. Die Kanten, über die sich die Halteklammer erstreckt, können an das Eck angrenzen. Somit können Varianten von erfindungsgemäßen Kartenhaltem mit unterschiedlich ausgestalteten Hüllen oder Seitenwänden und gleich ausgestalteten Halteklammem montiert werden, wobei nur das Eck der Hülle mit der Halteklammer verrastbar ausgestaltet sein kann. Es können beispielsweise unterschiedlich lange oder breite Hüllen mit der Halteklammer verbunden werden.

Um einen sicheren Halt der Halteklammer auf der Hülle zu gewährleisten, kann die Halteklammer in einer weiteren vorteilhaften Ausgestaltung zusätzlich mit der Hülle verschweißt sein. Die Halteklammer kann beispielsweise durch Ultraschallschweißen mit der Hülle verbunden werden.

An der Halteklammer und insbesondere im Bereich eines an der Halteklammer befestigten Befestigungselements können Belastungen auftreten, beispielsweise Biegemomente, die eine erhöhte Elastizität erfordern. Um unterschiedliche Materialeigenschaften der Halteklammer zu verwirklichen, um beispielsweise eine erhöhte Elastizität oder Zähigkeit der Halteklammer zu erreichen, kann die Halteklammer gegenüber der Hülle aus einem anderem Material gefertigt sein.

Für eine kostengünstige Vergrößerung der Variantenvielfalt kann die Hülle vorzugsweise wenigstens zwei Seitenwandelemente umfassen. Die Seitenwandelemente können zur Formung der Hülle miteinander verschweißt sein. Zur Bildung von für das Ultraschallschweißen geeigneten Fügezonen können die Seitenwandelemente insbesondere im Bereich ihrer Kanten rahmenartige Fortsätze aufweisen, die zusammen mit den Seitenwandabschnitten eine kastenförmige Gestaltung der Seitenwandelemente erzeugen können.

Um eine stabile Befestigung der Halteklammer auf den Seitenwandelementen zu gewährleisten oder ein seitliches Verrutschen der Halteklammer gegenüber der Hülle zu vermeiden, kann die Halteklammer auf an die Kanten angrenzenden Seitenwandabschnitten der Hülle oder der beiden Seitenwandelemente aufliegen.

Gemäß einer weiteren vorteilhaften Ausgestaltung des Kartenhalters können die Hülle oder die Seitenwandabschnitte an die Kanten angrenzende, sich im Wesentlichen quer zur einer Kartenebene erstreckende Stützflächen ausbilden, auf denen die Halteklammer aufliegt. Derartige Stützflächen ermöglichen eine Stabilisierung der Halteklammer in einer parallel zur Kartenebene verlaufenden Richtung. Die Seitenwandabschnitte können Aussparungen aufweisen, in welche die Halteklammer aufgenommen ist. Von der Halteklammer gebildete Außenwandabschnitte des Kartenhalters können mit von den Seitenwandelementen gebildeten Außenwandabschnitten fluchten. Die Stützflächen können von Innenflächen der Aussparungen gebildet sein.

In einer weiteren vorteilhaften Ausgestaltung kann wenigstens ein Seitenwandabschnitt wenigstens ein Dickenausgleichselement aufweisen, das eine Stützfläche ausbildet. Somit kann die Hülle bei gleichbleibend breiter Halteklammer insgesamt schmaler und materialsparender ausgestaltet sein. Das Dickenausgleichselement kann stegförmig ausgestaltet sein, um die Hülle mit geringem Materialaufwand in dem Bereich der Stützfläche zu verbreitern. Das Dickenausgleichselement kann sich im Wesentlichen quer zur Kartenebene von dem Seitenwandabschnitt weg erstrecken.

Gemäß einer weiteren vorteilhaften Ausgestaltung des eingangs genannten Kartenhalters können die Kanten mit wenigstens einem Rastelement versehen sein, wobei die Halteklammer mit dem Rastelement verrastet ist. Da die Kanten an den Rändern des Aufnahmeschachts angeordnet sind, können diese mit geringem Aufwand sehr viel steifer als die Seitenwandabschnitte der Hülle ausgestaltet sein, so dass eine deutlich stabilere Verrastung der Hülle mit der Halteklammer erreicht wird. Beispielsweise können die Kanten Versteifungsstege oder Profile aufweisen, die an Seitenwandelementen angeordnet ineinander eingreifen und die Steifigkeit der Kanten erhöhen.

Die Halteklammer kann mit zwei aufeinander zu gerichteten Rastelementen versehen sein, welche sich jeweils gleichzeitig mit der Hülle oder mit beiden Seitenwandelementen in Eingriff befinden. Die Rastelemente bilden somit gemeinsam ein Rastmittel, durch das eine formschlüssige Verbindung zwischen Halteklammer und Seitenwandelementen herstellbar ist. Dabei formt ein Rastelement jeweils eine Lösesicherung des jeweils anderen Rastelementes, indem es eine Bewegung der Halteklammer in eine Löserichtung des jeweils anderen Rastelementes blockiert

In einer weiteren vorteilhaften Ausgestaltung kann die Halteklammer elastisch verformbar ausgestaltet sein, um den Abstand zwischen zwei an der Halteklammer angeordneten Rastelementten durch eine elastische Dehnung und/oder Stauchung der Halteklammer verändern zu können. Ist die Halteklammer beispielsweise winkelförmig ausgestaltet, kann der Abstand der Rastelemente durch eine Spreizung vergrößert werden, um das Einrasten insbesondere von einander zugewandten Rastelementen an den Kanten der Hülle zu erleichtern. Um durch einen großen Federweg der elastisch verformbaren Halteklammer ein einfaches Verrasten der Halteklammer mit der Hülle zu gewährleisten, können die Formschlusselemente an einander gegenüberliegenden Enden der Halteklammer angeordnet sein. Somit steht die gesamte zwischen diesen Enden liegende Länge der Halteklammer für eine elastische Verformung der Halteklammer zur Verfügung.

Gemäß einer weiteren, auch für sich alleinstehend vorteilhaften Ausgestaltung des Kartenhalters kann dieser, um einen in den Kartenhalter eingelegten kartenförmigen Informationsträger gegen Herausfallen zu sichern, ein in den Aufnahmeschacht ragendes Sicherungsorgan umfassen. Das in den Aufnahmeschacht ragende Sicherungsorgan ist vorzugsweise durch den Informationsträger elastisch auslenkbar ausgestaltet. Das Sicherungsorgan kann wenigstens abschnittsweise elastisch verformbar ausgestaltet sein, um die Auslenkung aus dem Aufnahmeschacht zu ermöglichen. Alternativ oder zusätzlich kann das Sicherungsorgan beweglich in der Hülle angeordnet sein, um das Auslenken des Sicherungsorgans zu erleichtern.

Für eine einfache Montage und/oder eine bewegliche Aufnahme des Sicherungsorgans kann dieses in die Hülle eingesetzt sein. Das Sicherungsorgan kann vorzugsweise aus einem anderen Material als das Material der Hülle gefertigt sein. Um einen hohen Reibungskoeffizienten des Sicherungsorgans zu erreichen und außerdem die Auslenkbarkeit oder elastische Verformbarkeit des Sicherungsorgans zu verbessern, ist dieses vorzugsweise aus einem Elastomer gefertigt

Um Herstellkosten zu sparen, kann das Sicherungsorgan von einem Standardartikel aus anderen Produktbereichen gebildet sein. Beispielsweise kann das Sicherungsorgan von einer Dichtung oder einem Dichtkörper für elektrische Steckverbinder oder Kabelführungen gebildet sein. Das Sicherungsorgan kann folglich rotationssymmetrisch ausgestaltet sein.

Zur Erhöhung der durch das Sicherungsorgan übertragbaren Haltekraft oder des Reibungskoeffizienten kann das Sicherungsorgan an einer dem Aufnahmeschacht zugewandten Seite einen profilierten Halteabschnitt aufweisen, der bei eingelegtem kartenförmigen Informationsträger auf dem Informationsträger aufliegt. Der Halteabschnitt kann beispielsweise mit einer lamellenartigen Oberflächenstruktur versehen sein.

Gemäß einer weiteren vorteilhaften Ausgestaltung des Kartenhalters ist das Sicherungsorgan zwischen den Seitenwandelementen angeordnet. Das Sicherungsorgan kann außerdem formschlüssig von den Seitenwandelementen gehalten sein. Auf diese Weise kannmit der Montage der Seitenwandelemente zugleich das Sicherungsorgan befestigt werden.

Um das Sicherungsorgan in der Hülle zu halten und/oder eine Störung oder Beschädigung des Sicherungsorgans durch von außen auf die Hülle einwirkende Einflüsse zu vermeiden, kann die Halteklammer das Sicherungsorgan vorzugsweise abdecken. Die Halteklammer kann bevorzugt eine Aufnahme ausbilden, in die das Sicherungsorgan einsetzbar ist.

Die Aufnahme kann eine Führung oder Lagerung des Sicherungsorgans umfassen, durch die das Sicherungsorgan beweglich oder drehbar gelagert ist. Beispielsweise kann das Sicherungsorgan rotationssymmetrisch ausgestaltet sein und eine umlaufende Nut umfassen, in die ein von der Halteklammer gebildeter Steg einsetzbar ist. Alternativ oder zusätzlich können die Seitenwandelemente Fortsätze aufweisen, die beispielsweise als Zapfen ausgestaltet sein können. Die Fortsätze können im Wesentlichen quer zur Einschubrichtung verlaufen und in miteinander fluchtende Bohrungen im Sicherungsorgan einsetzbar sind. Die Zapfen können somit eine Drehachse bilden, um die das Sicherungsorgan drehbar gelagert ist.

In einer weiteren vorteilhaften Ausgestaltung kann das Sicherungsorgan um eine quer zur Einschubrichtung verlaufende Drehachse drehbar gelagert sein. Somit ist der notwendige Kraftaufwand beim Einschieben des kartenförmigen Informationsträgers in die Hülle verringert. Vorzugsweise kann das Sicherungsorgan während des Einschiebens des Informationsträgers auf dem Informationsträger abrollen. Somit kann durch das Sicherungsorgan eine relativ große Normalkraft auf den Informationsträger aufgebracht werden, ohne dass die zum Anschieben des Informationsträgers erforderliche Kraft vergrößert ist.

Das Sicherungsorgan kann gemäß einer weiteren vorteilhaften Ausgestaltung kalotten- oder kuppelförmig ausgestaltet sein. Zur Befestigung eines kalotten- oder kuppelförmigen Sicherungsorgans kann das Sicherungsorgan mit der Hülle verklebt oder verschweißt sein. Alternativ oder zusätzlich kann an wenigstens einer der Innenseiten des Aufnahmeschachts eine Aufnahme, beispielsweise eine Vertiefung vorgesehen sein, in die das bevorzugt aus einem Elastomer gebildete Sicherungsorgan einsetzbar ist.

Um wenigstens zwei separate Aufnahmeschächte zur Aufnahme von jeweils einem kartenförmigen Informationsträger zu bilden, kann der Kartenhalter wenigstens ein Zwischenwandelement aufweisen, das zwischen den Seitenwandelementen angeordnet ist, wobei sich jeweils ein Aufnahmeschacht zwischen dem Zwischenwandelement und einem der Seitenwandelemente befindet. Um eine Bewegung des Zwischenwandelementes insbesondere in oder entgegen der Einschubrichtung zu verhindern, kann wenigstens eines der Seitenwandelemente ein oder mehrere Formschlusselemente aufweisen, die mit Formschlusselementen der Zwischenwand in Eingriff bringbar ausgestaltet sind. Die Formschlusselemente des Seitenwandelementes und/oder des Zwischenwandelementes kann sich insbesondere quer zur Einschubrichtung erstrecken. Das Formschlusselement des Seitenwandelementes kann wenigstens eine in und/oder entgegen der Einschubrichtung weisende Haltefläche aufweisen, die auf einer Haltefläche des Formschlusselementes des Zwischenwandelementes aufliegt. Beispielsweise kann wenigstens eines der Seitenwandelemente wenigstens einen Fortsatz aufweisen, der in eine komplementär ausgestaltete Aussparung des Zwischenwandelementes einsetzbar ist.

Die Seitenwandelemente können rahmenartig ausgestaltet sein. Beispielsweise können die Seitenwandelemente sich quer zur den Seitenwandabschnitten erstreckende Stege aufweisen, die eine das Zwischenwandelemente randseitig umgreifende Aufnahme bilden. Die Stege können Formschlusselemente bilden, mit welchen die Formschlusselemente der Halteklammer in Eingriff bringbar sind. Die Formschlusselemente können von in Richtung des Aufnahmeschachtes weisenden Ausbuchtungen der Stege gebildet sein, die an ihrer von dem Aufnahmeschacht weg weisenden Seite eine Aufnahme für jeweils ein Formschlusselement der Halteklammer formen. Die Ausbuchtungen können in Aussparungen des Zwischenwandelementes eingesetzt sein und auf diese Weise einen Formschluss mit dem Zwischenwandelement bilden, durch den das Zwischenwandelement zwischen den Seitenwandelementen unverschieblich gehalten ist.

Um eine Bewegung des Zwischenwandelementes quer zur Einschubrichtung zu blockieren, kann das Zwischenwandelement randseitig mit wenigstens einer Verbreiterung oder einem Stützsteg ausgestattet sein, der jeweils auf der Innenseite eines Seitenwandelementes aufliegt und somit das Zwischenwandelement seitlich fixiert.

Um den Kartenhalter an einem Halsband, einem Schlüsselring oder anderen Befestigungselementen befestigen zu können, kann die Halteklammer eine Aufnahme für ein Befestigungselement aufweisen. Das Befestigungselement kann beispielsweise von einer Öffnung in der Halteklammer geformt sein. Vorzugsweise ist die Aufnahme an einem Eck der im Wesentlichen winkelförmigen Halteklammer angeordnet. Um ausreichend Raum für die Aufnahme zu schaffen, kann die Halteklammer mit einem Fortsatz versehen sein, der sich von der Hülle weg erstreckt. In dem Fortsatz kann eine durchgängige Öffnung für die Aufnahme eines Schlüsselrings, eines Bandes oder eines anderen Befestigungselementes angeordnet sein.

Der Kontakthalter kann als ein Baukasten zum wahlweisen Zusammenbau des Kartenhalters mit einem oder zwei Aufnahmeschächten mit jeweils einer entgegen einer Einschubrichtung weisenden Aufnahmeöffnung, mit wenigstens zwei Seitenwandelementen zur Bildung des wenigstens einen Aufnahmeschachtes und mit der Halteklammer mit einer Aufnahme für jeweils nicht mehr als zwei der Seitenwandelementen ausgebildet sein.

Neben der Materialersparnis, die aufgrund der nun möglichen kleineren Abmessungen der Halteklammer erreicht wird, kann die Halteklammer für eine Vielzahl von Varianten von Seitenwandelementen verwendet werden. Bis auf die Abmessungen der Seitenwandelemente im Bereich der Aufnahme der Halteklammer können die Maße der Halteklammern beliebig variiert werden.

Im Folgenden wird die Erfindung anhand unterschiedlicher Ausführungsformen mit Bezug auf die Figuren beispielhaft erläutert. Dabei stellen die beschriebenen Ausführungsformen lediglich mögliche Ausgestaltungen dar, die für den jeweiligen Anwendungsfall modifiziert werden können. Einzelne, für sich vorteilhafte Merkmale können gemäß der obigen Beschreibung der vorteilhaften Ausgestaltungen bei der jeweils beschriebenen Ausführungsform hinzugefügt oder weggelassen werden.

Es zeigen:
- Fig. 1: eine schematische Explosionsansicht eines ersten Ausführungsbeispiels der Erfindung;
- Fig. 2: eine schematische Explosionsansicht eines zweiten Ausführungsbeispiels der Erfindung, das sich von den in Fig. 1 gezeigten Ausführungsbeispiel durch ein Zwischenwandelement unterscheidet;
- Fig. 3: eine schematische Vorderansicht des ersten Ausführungsbeispiels der Erfindung;
- Fig. 4: eine schematische Seitenansicht des ersten Ausführungsbeispiels der Erfindung;
- Fig. 5: eine schematische Unteransicht des ersten Ausführungsbeispiels der Erfindung;
- Fig. 6: eine schematische Rückansicht des ersten Ausführungsbeispiels der Erfindung;
- Fig. 7: eine teilweise geschnittene schematische Vorderansicht des ersten Ausführungsbeispiels des Kartenhalters mit eingelegtem kartenförmigen Informationsträger;
- Fig. 8: eine schematische geschnittene Vorderansicht des ersten Ausführungsbeispiels eines erfindungsgemäßen Kartenhalters mit vollständig in den Aufnahmeschacht aufgenommenen kartenförmigen Informationsträger;
- Fig. 9: eine schematische Vorderansicht des zweiten Ausführungsbeispiels;
- Fig. 10: eine schematische Seitenansicht des zweiten Ausführungsbeispiels;
- Fig. 11: eine schematische Draufsicht des zweiten Ausführungsbeispiels;
- Fig. 12: eine schematische Rückansicht des zweiten Ausführungsbeispiels;
- Fig. 13: eine geschnittene schematische Vorderansicht des zweiten Ausführungsbeispiels der Erfindung mit eingelegtem Informationsträger;
- Fig. 14: eine schematische geschnittene Rückansicht des zweiten Ausführungsbeispiels der Erfindung mit vollständig eingesetztem Informationsträger;
- Fig. 15: eine schematische perspektivische Ansicht der Halteklammer.

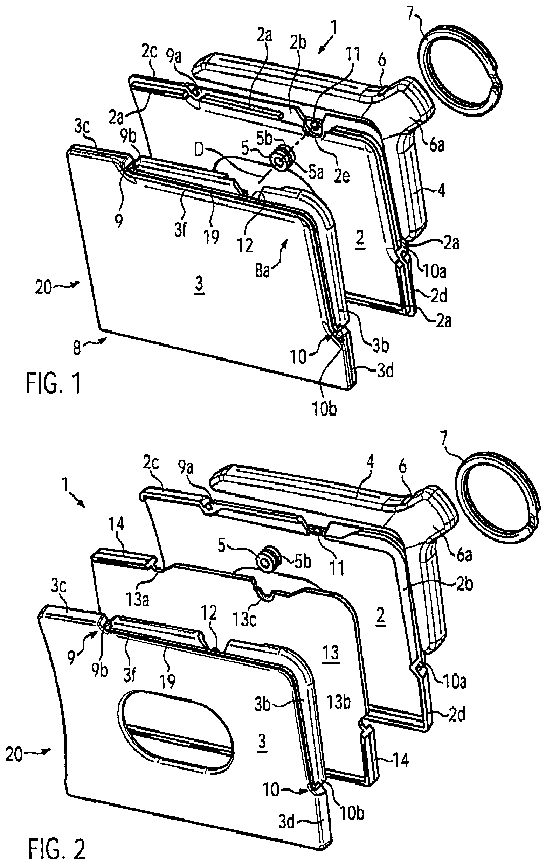

Zunächst wird der Aufbau eines erfindungsgemäßen Kartenhalters mit Bezug auf das Ausführungsbeispiel der Fig. 1 beschrieben.

Der Kartenhalter 1 umfasst zwei Seitenwandelemente 2, 3, die im zusammengebauten Zustand einen Aufnahmeschacht bilden. Die Seitenwandelemente 2, 3 sind mit einer Halteklammer 4 verrastet. Zwischen den Seitenwandelementen 2, 3 ist ein Sicherungsorgan 5 angeordnet, das im zusammengebauten Zustand in den Aufnahmeschacht hineinragt.

Die Halteklammer 4 umfasst eine Aufnahme 6 für ein Befestigungselement 7, das beispielhaft als Ring ausgestaltet sein kann. Die Aufnahme 6 ist an einem Fortsatz 6a angeordnet, der die Festigkeit der Halteklammer 4 im Bereich der Aufnahme 6 erhöht.

Das Seitenwandelement 2 ist mit Formschlusselementen 2a versehen, die stegförmig ausgestaltet sind und an Innen- und/oder Außenseiten von ebenfalls stegförmig ausgestalteten Formschlusselementen des Seitenwandelementes 3 anliegen. Das Formschlusselement 2a ist in insgesamt vier Segmente unterteilt, wobei die von den Segmenten begrenzten Lücken Raum für weitere Funktionselemente bieten.

Die Halteklammer 4 erstreckt sich im zusammengebauten Zustand des Kartenhalters 1 über ein Eck 8 der von den Seitenwandelementen 2 und 3 gebildeten Hülle 8. Die Halteklammer liegt auf an das Eck 8 angrenzenden Seitenwandabschnitten 2b und 3b der Seitenwandelemente 2 und 3 auf. Um die Seitenwandabschnitte 2b und 3b in eine hier nicht gezeigte Aufnahme der Halteklammer 4 einführen zu können, entspricht die Breite der Hülle 8 im Bereich der Seitenwandabschnitte 2b und 3b einer inneren Breite der Aufnahme der Halteklammer 4.

Die Halteklammer 4 erstreckt sich über jeweils zwei Kanten 2c, 2d und 3c, 3d der Seitenwandelemente 2, 3. Folglich erstreckt sich die Halteklammer 4 auch über zwei Kanten der von den Seitenwandelementen 2, 3 gebildeten Hülle 8. Die Kanten 2c, 3c umfassen jeweils eine Hälfte 9a, 9b eines von der Hülle 8 gebildeten Rastelementes 9. Entsprechend umfassen die Kanten 2c, 2d jeweils eine Hälfte 10a, 10b eines zweiten Rastelementes 10 der Hülle 8.

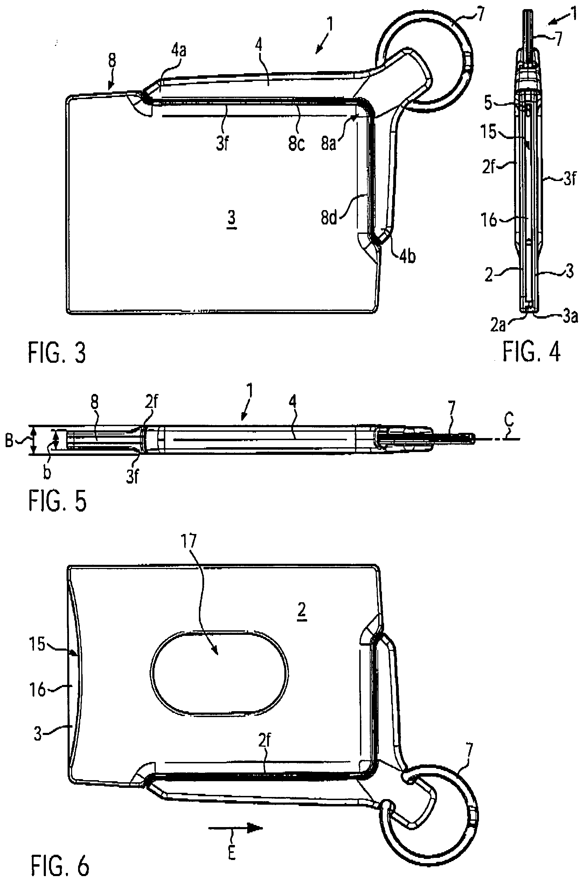

Die Seitenwandabschnitte 2b, 3b sind an ihren Außenseiten mit stegförmig ausgestalteten Dickenausgleichselementen 3f versehen, die sich quer zu einer (in Fig. 5 gezeigten) Kartenebene C erstreckende Stützflächen 19 ausbilden

Das Sicherungsorgan 5 ist von einem rotationssymmetrisch ausgestalteten Dichtkörper gebildet, der auf dem Markt als kostengünstiger Massenartikel erhältlich ist. Das Sicherungsorgan 5 ist auf einander gegenüberliegenden Seiten des Sicherungsorgans 5 mit Öffnungen 5a versehen, in die von einer Seite ein Zapfen 11 des einen Seitenwandelementes und von der anderen Seite ein Zapfen 12 des anderen Seitenwandelementes 3 einführbar ist Die Zapfen 11 und 12 erstrecken sich entlang einer Achse D aufeinander zu. Die Zapfen 11 und 12 erstrecken sich in die Öffnungen 5a und bilden somit eine formschlüssige Halterung für das Sicherungsorgan 5. bilden zusammen eine Drehachse D, auf der das Sicherungsorgan 5 drehbar gelagert ist. Die Zapfen 11, 12 sind jeweils in teilkreisförmigen Aussparungen 2e der Seitenwandelemente 2, 3 konzentrisch angeordnet. Die auf sich gegenüberliegenden Seiten der Seitenwandelemente 2, 3 vorgesehenen Aussparungen 2e bilden zusammen eine Aufnahme für das Sicherungsorgan 5, innerhalb derer das Sicherungsorgan 5 drehbar gelagert ist.

Fig. 2 zeigt ein weiteres Ausführungsbeispiel eines erfindungsgemäßen Kartenhalters, wobei für Elemente, die in Funktion und Aufbau den Elementen des Ausführungsbeispiels der Fig. 1 entsprechen, dieselben Bezugszeichen verwendet werden. Der Kürze halber wird auf die Unterschiede zum Ausführungsbeispiel der Fig. 1 eingegangen.

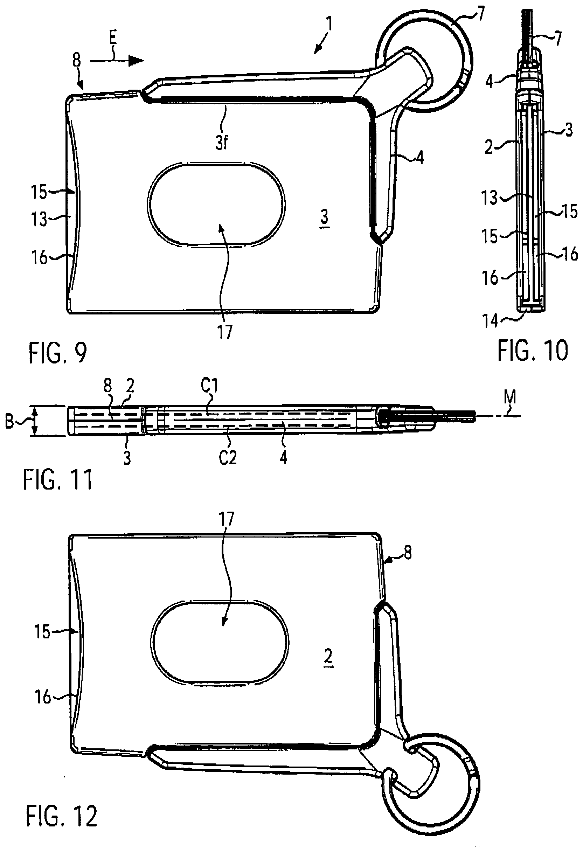

Der Kartenhalter der Fig. 2 umfasst zwei Aufnahmeschächte für kartenförmige Informationsträger. Um die zwei Aufnahmeschächte voneinander zu trennen, ist ein Zwischenwandelement 13 vorgesehen, das zwischen den Seitenwandelementen 2, 3 angeordnet ist. Die halbschalenför mig ausgestalteten Seitenwandelemente 2, 3 bilden im montierten Zustand einen Hohlraum, in den das Zwischenwandelement 13 aufgenommen ist. Um Fügezonen zum Verschweißen des Zwischenwandelementes 13 mit den Seitenwandelementen 2,3 im Ultraschallschweißverfahren zu bilden, ist das Zwischenwandelement 13 randseitig mit Stützstegen 14 ausgestattet, die sich beidseitig quer zu in Fig. 11 gezeigten Kartenebenen C1, C2 eines kartenförmigen Informationsträgers an den Innenseiten der Seitenwandelemente 2, 3 abstützen. Des Weiteren dienen die Stützstege 14 insbesondere während des Fertigungsprozesses dazu, das Zwischenwandelement 13 zwischen den Seitenwandelementen 2, 3 zu zentrieren bzw. eine seitliche Verschiebung des Zwischenwandelementes 13 zu verhindern.

Aussparungen 13a, 13b des Zwischenwandelementes 13 bieten den von Kanten 2c, 2d, 3c, 3d der Seitenwandelemente 2, 3 gebildeten Hälften 9a, 9b und 10a, 10b von Rastelementen 9, 10 einen sich nach innen erstreckenden Raum, in den sich im zusammengebauten Zustand die Rastelemente 9, 10 zur Aufnahme komplementärer Rastelemente der Halteklammer 4 erstrecken. Die Ränder der Aussparungen 13a, 13b liegen unmittelbar an den nach innen weisenden Seiten der Rastelemente 9, 10 an. Die Rastelemente 9, 10 bilden somit mit ihren nach innen weisenden Seiten Formschlusselemente, welche das Zwischenwandelement 13 zwischen den Seitewandelementen 2, 3 unverschieblich fixieren.

Das Zwischenwandelement 13 umfasst eine Aufnahme 13c für das Sicherungsorgan 5, die von einem halbkreisförmigen Ausschnitt 13c geformt ist. Das Sicherungsorgan 5 ist mit einer umlaufenden Nut 5b ausgestattet, in welche die Aufnahme 13c einsetzbar ist. Die Aufnahme 13c stabilisiert somit das Sicherungsorgan 5, um das Sicherungsorgan 5 auch bei asymmetrischen Kräften, die beispielsweise während des Einlegens eines einzelnen kartenförmigen Informationsträgers in den Kartenhalter 1 auftreten können, zu stabilisieren.

Das Sicherungsorgan 5 ist aus einem elastischen Material, vorzugsweise aus einem Elastomer, beispielsweise Gummi hergestellt und durch einen einlegbaren kartenförmigen Informationsträger elastisch auslenkbar. Auch bei relativ geringen, auf den Informationsträger wirkenden Normalkräften kann somit ein sehr hoher Haftreibungskoeffizient erreicht werden, der eine sichere Halterung des Informationsträgers in dem Kartenhalter 1 ermöglicht.

Die Seitenwandelemente 2, 3 und/oder das Zwischenwandelement 13 und/oder die Halteklammer 4 können vorzugsweise aus Kunststoff und insbesondere durch ein Spritzgussverfahren hergestellt sein. Die Seitenwandelemente 2, 3 können miteinander und/oder mit dem Zwischenwandelement 13 verschweißt sein. Vorzugsweise sind die Seitenwandelemente 2, 3 miteinander bzw. mit dem Zwischenwandelement 13 durch Ultraschallschweißen verbunden.

Die in den Explosionsansichten der Figuren 1 und 2 gezeigten Einzelteile stellen Komponenten eines Baukastens 20 dar, aus dem Kartenhalter 1 mit einem oder mit zwei Aufnahmeschächten aufgebaut werden können. Insbesondere die Halteklammer 4 und/oder das Sicherungsorgan sind für verschiedene Varianten eines Kartenhalters 1 identisch aufgebaut. Die Zwischenwand 13 kann hinzugefügt oder weggelassen werden.

Fig. 3 ist eine Vorderansicht des in Fig. 1 gezeigten Ausführungsbeispiels. Die im Wesentlichen winkelförmig oder Y-förmig ausgestaltete Halteklammer liegt an ihren in Richtung des Aufnahmeschachtes weisenden Seiten an den Seitenwandabschnitten 2, 3 an. Um trotz der schmalen Abmessungen der von den Seitenwandabschnitten 2, 3 gebildeten Hülle 8 dieses Anliegen der Halteklammer 4 zu ermöglichen, sind die Seitenwandabschnitte 2, 3 mit Dickenausgleichselementen 2f, 3f versehen, die sich quer zur Kartenebene erstreckende Stützflächen ausbilden, auf denen die Halteklammer aufliegt. Die sich gegenüberliegenden Enden 4a, 4b der Halteklammer 4 sind an ihren nach außen weisenden Seiten angeschrägt. Die Halteklammer 4 überlappt das Eck 8a der Hülle 8 an beiden an das Eck 8a angrenzenden Kanten 8c und 8d. Die angeschrägten Enden 4a und 4b der Halteklammer 4 bilden somit einen nahezu stufenlosen Übergang zu den Kanten 8c, 8d, Ein versehentliches Hängenbleiben eines Endes 4a, 4b der Halteklammer 4, beispielsweise an der Kleidung des Benutzers, ist somit ausgeschlossen.

Fig. 4 ist eine Seitenansicht des Kartenhalters der Fig. 1. Die Formschlusselemente 2a des Seitenwandelementes 2 liegen auf Innenseiten der von Formschlusselementen 3a des Seitenwandelementes 3 an und bilden somit zusammen mit der Halteklammer 4 eine unverschiebliche Verbindung zwischen den Seitenwandelementen 2 und 3.

Der Kartenhalter 1 umfasst einen Aufnahmeschacht 15 mit einer Aufnahmeöffnung 16. In den Aufnahmeschacht 15 ragt das Sicherungsorgan 5. Beim Einlegen eines kartenförmigen Informationsträgers, beispielsweise einer Scheckkarte oder eines Firmenausweises, wird das Sicherungsorgan 5 elastisch durch den Informationsträger ausgelenkt. Aufgrund der rotationssymmetrischen Gestaltung des Sicherungsorgans 5 und seiner drehbaren Lagerung in der Hülle 8 kann sich das Sicherungsorgan 5 während des Einschiebens des Informationsträgers drehen. Die für das Einschieben des Informationsträgers erforderliche Kraft ist somit verringert. Die elastische Verformung des Sicherungsorgans 5, das quer zur Einschubrichtung des Informationsträgers deformiert wird, erzeugt dennoch einen Reibungswiderstand, der groß genug ist, um ein unbeabsichtigtes Herausfallen des Informationsträgers aus der Hülle 8 zu verhindern.

Fig. 5 ist eine Draufsicht des ersten Ausführungsbeispiels des Kartenhalters 1. Während die Hülle 8 über den Großteil ihrer Erstreckung eine Breite b aufweist, sind die an die Halteklammer 4 angrenzenden Bereiche der Hülle 8 durch die Dickenausgleichselemente 2f, 3f verbreitert. Somit weist der an die Halteklammer 4 grenzende Bereich der Hülle 8 eine Breite B auf, die der Breite der Hülle 4 entspricht, während benachbarte Bereiche der Hülle 8 eine verringerte Breite b aufweisen.

Fig. 6 ist eine Rückansicht des ersten Ausführungsbeispiels des erfindungsgemäßen Kartenhalters. Durch die Aufnahmeöffnung 16 sind kartenförmige Informationsträger in den Aufnahmeschacht 15 einführbar. Eine Grifföffnung 17 in dem Seitenwandelement 2 dient als Zugriffsmöglichkeit auf einen eingelegten Informationsträger. Durch die Grifföffnung 17 kann ein in den Aufnahmeschacht 15 aufgenommener Informationsträger in Richtung der Aufnahmeöffnung 16 verschoben werden, bis ein Ende des Informationsträgers an der Einführöffnung 16 herausragt und gegriffen werden kann.

Um das Einschieben des Informationsträgers in die Einführöffnung 16 zu erleichtern, ist der an die Einführöffnung 16 grenzende Rand des Seitenwandelementes 2 gegenüber dem an die Einführöffnung grenzenden Rand des Seitenwandelementes 3 in Einschubrichtung E versetzt. Der Versatz ist durch einen bogenförmigen Verlauf des von dem Seitenwandelement 2 gebildeten Randes der Einführöffnung 16 geformt, wobei sich der Bogen in Einschubrichtung E wölbt. Somit kann Druck auf den Informationsträger ausgeübt werden, bis dieser an das von der Einführöffnung 16 weg weisende Ende des Aufnahmeschachtes 15 stößt.

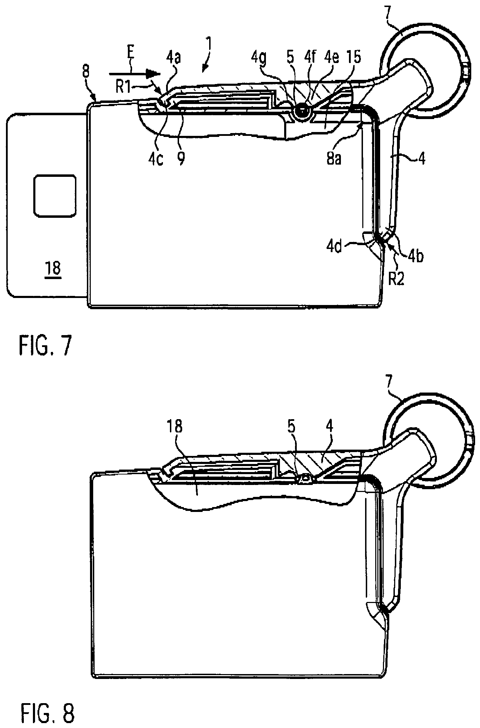

Fig. 7 ist eine geschnittene schematische Vorderansicht des ersten Ausführungsbeispiels eines erfindungsgemäßen Kartenhalters 1. In den Kartenhalter 1 ist ein Informationsträger 18 aufgenommen. Der Informationsträger 18 befindet sich in einer Entnahmestellung, in welcher dieser keinen Kontakt zum Sicherungsorgan 5 aufweist. Wird der Informationsträger 18 in Einschubrichtung E weiter in den Aufnahmeschacht 15 eingeschoben, stößt der obere Rand des Informationsträgers gegen das Sicherungsorgan 5 und lenkt dieses aus dem Aufnahmeschacht 15 aus. Während des Einschiebens des Informationsträgers 18 kann zugleich eine Drehbewegung des Sicherungsorgans 5 erfolgen. Der Informationsträger 18 rollt somit auf dem Sicherungsorgan 5 ab, wodurch das Einschieben des Informationsträgers 18 erleichtert ist. Alternativ kann das Sicherungsorgan 5 unbeweglich oder nicht drehbar in die Hülle 8 aufgenommen sein. Ein in den Aufnahmeschacht 15 ragender Halteabschnitt des Sicherungsorgans 5 kann mit einem Profil, beispielsweise einer lamellenartigen Struktur versehen sein, um die auf den Informationsträger wirkenden Haltekräfte oder Reibkräfte bei gleichbleibenden Druck- oder Normalkräften zu erhöhen.

Die Halteklammer 4 ist an ihren Enden 4a, 4b mit Rastelementen 4c, 4d versehen, die sich mit dem Rastelement 9 und dem in den Figuren 1 und 2 gezeigten Rastelementen 10 in Eingriff befinden. Das Rastelement 4c rastet in einer Rastrichtung R1 ein, das Rastelement 4d in einer Rastrichtung R2. Die Rastrichtungen R1 und R2 sind einander entgegengesetzt, so dass sich die Rastelemente 4c und 4d gegeneinander abstützen. Die Halteklammer 4 bildet folglich mit den Rastelementen 4c und 4d ein Rastmittel, das mit dem Eck 8a der Hülle 8 verrastbar ist. Die für das Verrasten notwendige Verformung wird dabei Ober die gesamte Längserstreckung der Halteklammer 4 erreicht, die beim Verrasten mit der Hülle 8 gespreizt wird.

Das Sicherungsorgan 5 ist auf einem Mittelsteg 4e gehalten, der zur Aufnahme des Sicherungsorgans 5 Einbuchtungen 4f und 4g aufweist. Bei der gezeigten ersten Ausführungsform des Kartenhalters 1 ist der Mittelsteg 4e im Bereich der Einbuchtung 4f in die in den Figuren 1 und 2 gezeigte umlaufende Nut 5b des Sicherungsorgans 5 eingesetzt. Das Sicherungsorgan 5 wird somit in einer Position gehalten, in der es in den Aufnahmeschacht 15 hineinragt. Das Sicherungsorgan 5 ragt in die Verschiebestrecke des Informationsträgers 18 hinein und wird somit während des Einschiebens des Informationsträgers 18 in den Aufnahmeschacht 15 aus dem Aufnahmeschacht 15 ausgelenkt.

Die Halteklammer 4 ist für die erste Ausführungsform gemäß Fig. 1 und die zweite Ausführungsform gemäß Fig. 2 identisch ausgestaltet. Um quer zur Einschubrichtung E zwei Positionen des Sicherungsorgans 5 zu ermöglichen, ist der Mittelsteg 4e mit zwei Ausbuchtungen 4f, 4g versehen, die in Einschubrichtung E unterschiedlich positioniert sind. Die Ausbuchtungen 4f, 4g sind in Einschubrichtung E hintereinander angeordnet. Während die Einbuchtung 4f für einen Kartenhalter mit einem Aufnahmeschacht gemäß Fig. 1 quer zur Einschubrichtung E weiter in Richtung des Aufnahmeschachtes 15 verlagert ist, ist die Einbuchtung 4g zur Aufnahme des Sicherungsorgans 5 in einem Kartenhalter mit zwei Aufnahmeschächten gemäß Fig. 2 weiter vom Aufnahmeschacht 15 entfernt. Das Sicherungsorgan 5 ragt folglich je nach Ausführungsform des Kartenhalters 1 unterschiedlich weit in den Aufnahmeschacht 15 hinein.

Fig. 8 zeigt eine Vorderansicht des ersten Ausführungsbeispiels eines erfindungsgemäßen Kar tenhalters mit vollständig eingeschobenem Informationsträger 18. Bei eingeschobenem Informationsträger 18 ist das Sicherungsorgan 5 zwischen Informationsträger 18 und Halteklammer 4 komprimiert. Die das Sicherungsorgan 5 abdeckende Halteklammer 4 hält das Sicherungsorgan 5 folglich in einer Position, in der ein Reibschluss zwischen Sicherungsorgan 5 und Informationsträger 18 besteht.

Fig. 9 ist eine Vorderansicht des zweiten Ausführungsbeispiels eines erfindungsgemäßen Kartenhalters gemäß Fig. 2, wobei für Elemente, die in Funktion und Aufbau den Elementen des Ausführungsbeispiels der Fig. 1 entsprechen, dieselben Bezugszeichen verwendet werden. Der Kürze halber wird auf die Unterschiede zum Ausführungsbeispiel der Fig. 1 eingegangen.

Der Kartenhalter 1 ist mit einer Zwischenwand 13 versehen, die zwei benachbarte Aufnahmeschächte zur Aufnahme von kartenförmigen Informationsträgern voneinander trennt. Sowohl das Seitenwandelement 3 als auch das in der Rückansicht in Fig. 12 gezeigte Seitenelement 2 sind mit einer Grifföffnung versehen, durch die der eingelegte Informationsträger per Hand bewegt werden kann.

Fig. 10 ist eine Seitenansicht auf das Ausführungsbeispiel der Fig. 9, wobei die Blickrichtung der Einschubrichtung E entspricht. Die beiden Aufnahmeschächte 15 sind durch das Zwischenwandelement 13 voneinander getrennt. Um die mittige Position des Zwischenwandelementes 13 zwischen den Seitenwandelementen 2 und 3 sicherzustellen und ein Verschweißen des Zwischenwandelementes 13 mit den Seitenwandelementen 2 und 3 zu erleichtern, weist das Zwischenwandelement 13 einen Stützsteg 14 auf, der sich quer zu den Kartenebenen erstreckt und beidseitig an den Innenseiten der Seitenwandelemente 2, 3 anliegt. Die Seitenwandelemente 2, 3 sind im Wesentlichen halbschalenförmig ausgestaltet und bilden einen bis auf die Einführöffnungen 16 und eine Aufnahmeöffnung für das Sicherungsorgan einen geschlossenen Hohlraum, in welchen das Zwischenwandelement 13 eingesetzt ist.

Fig. 11 ist eine Draufsicht des zweiten Ausführungsbeispiels eines erfindungsgemäßen Kartenhalters. Die Breite B der Hülle 8 entspricht außerhalb der von der Halteklammer 4 umschlossenen, in den Figuren 1 und 2 gezeigten Seitenwandabschnitte 2b, 3b der Breite der Halteklammer 4. Parallel zu den Kartenebenen C1, C2, die schematisch als gestrichelte Linien dargestellt sind, fluchten folglich die Außenseiten der Seitewandelemente 2, 3 mit den Außenseiten der Halteklammer 4.

Fig. 12 ist eine Rückansicht des zweiten Ausführungsbeispiels. Die Seitenwandelemente 2, 3 und das Zwischenwandelement 13 sind bezüglich einer Mittenebene M, die in Fig. 11 gezeigt ist, symmetrisch ausgestaltet. Das Seitenwandelement 2 ist wie das Seitenwandelement 3 mit einer Grifföffnung 17 versehen. Folglich entspricht die Rückansicht der Hülle 8 der in Fig. 9 gezeigten Vorderansicht der Hülle 8.

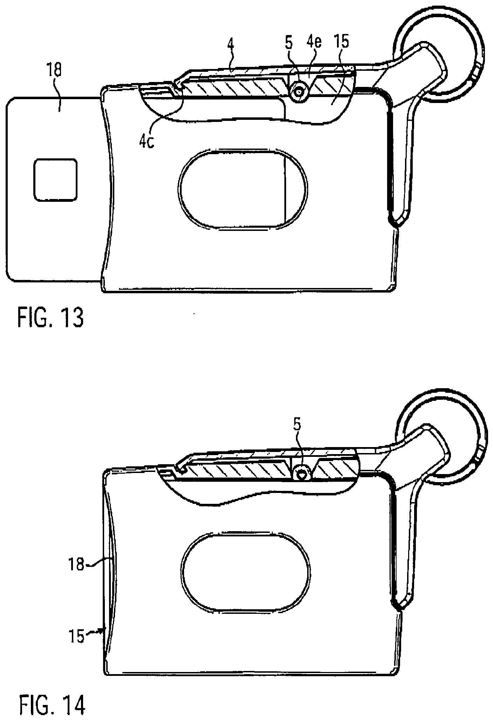

Fig. 13 ist eine schematische, geschnittene Vorderansicht des zweiten Ausführungsbeispiels eines Kartenhalters, wobei für Elemente, die in Funktion und Aufbau den Elementen des Ausführungsbeispiels der Fig. 7 entsprechen, dieselben Bezugszeichen verwendet werden. Der Kürze halber wird auf die Unterschiede zum Ausführungsbeispiel der Fig. 7 eingegangen.

Die Ansicht ist im Bereich des vorderen Aufnahmeschachtes 15 geschnitten dargestellt. Während die umlaufende Nut des Sicherungsorgans 5 den Mittelsteg 4e der Halteklammer 4 aufnimmt, ragt die vordere Hälfte des Sicherungsorgans 5 in den vorderen Aufnahmeschacht 15. Die hintere Hälfte des Sicherungsorgans 5 ragt hingegen in den hier nicht gezeigten hinteren Aufnahmeschacht 15.

Fig. 14 ist eine Vorderansicht des Kartenhalters gemäß Fig. 13 mit eingeschobenen Informationsträger 18. In der eingeschobenen Position des Informationsträgers 18 ist die dem vorderen Aufnahmeschacht 15 zugeordnete vordere Hälfte des Sicherungsorgans 5 durch den Informationsträger 18 zusammengedrückt. Es entsteht folglich ein Reibschluss, der den Informationsträger 18 in dem Aufnahmeschacht 15 hält. Die hintere Hälfte des Sicherungsorgans 5, die in den hinteren Aufnahmeschacht 15 ragt, ist hingegen aufgrund der in den Figuren 1 und 2 gezeigten umlaufenden Nut 5b nicht oder kaum von der elastischen Verformung der vorderen Hälfte des Sicherungsorgans 5 beeinträchtigt.

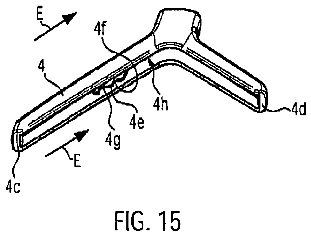

Fig. 15 ist eine perspektivische Ansicht der Halteklammer 4. Eine Aufnahme 4h der Halteklammer 4 dient der Aufnahme von Seitenwandabschnitten 2b, 3b der Seitenwandelemente 2, 3. Somit umschließt die Halteklammer 4 wenigstens abschnittsweise die Seitenwandelemente 2, 3. Des Weiteren werden Bereiche der Seitenwandelemente 2, 3 von der Halteklammer 4 überlappt. Der sich in Einschubrichtung E innerhalb der Aufnahme 4h erstreckende Mittelsteg 4e ist mit zwei Einbuchtungen 4f, 4g versehen, die in Einschubrichtung E in unterschiedlichen Positionen angeordnet sind, um relativ zu Hülle 8 unterschiedliche Positionen des Sicherungsorgans 5 zu ermöglichen. Somit kann die Länge eines Teilabschnittes einer Einschubstrecke des Informationsträgers eingestellt werden, entlang dessen das Sicherungsorgan 5 auf dem Informationsträger reibschlüssig aufliegt. So kann das Sicherungsorgan 5 bei einem Kartenhalter 1 mit einem Aufnahmeschacht in Einschubrichtung E weiter von der Aufnahmeöffnung entfernt und bei einem Kartenhalter 2 mit zwei Aufnahmeschächten entgegen der Einschubrichtung E näher an der Aufnahmeöffnung angeordnet sein.

Um die von dem Sicherungsorgan 5 auf den Informationsträger wirkenden Druckkräfte und somit die resultierenden Reibkräfte zu variieren, kann das Sicherungsorgan in den unterschiedlichen Positionen unterschiedlich weit in den Aufnahmeschacht ragen. So ist die Einbuchtung 4f gegenüber der Einbuchtung 4g in Richtung des Aufnahmeschachtes und quer zur Einschubrichtung E verlagert.

## Patentansprüche

1. Kartenhalter (1) mit einer Hülle (8), die wenigstens einen Aufnahmeschacht (15) mit einer entgegen einer Einschubrichtung (E) weisenden Aufnahmeöffnung (16) zur Aufnahme wenigstens eines kartenförmigen Informationsträgers (18) in Einschubrichtung (E) umfasst, **wobei** eine sich über nicht mehr als zwei Kanten (8c, 8d) der Hülle (8) erstreckende Halteklammer (4), die mit der Hülle (8) verrastet ist, **dadurch gekennzeichnet, dass** die Halteklammer (4) winkel- oder Y-förmig ausgestaltet ist und ein Eck (8a) der Hülle (8) an beiden an das Eck (8a) angrenzenden Kanten (8c, 8d) überlappt.

2. Kartenhalter (1) nach Anspruch 1, **dadurch gekennzeichnet, dass** die Halteklammer (4) und die Hülle (8) aus unterschiedlichen Materialien gefertigt sind.

3. Kartenhalter (1) nach Anspruch 1 oder 2, **dadurch gekennzeichnet, dass** die Halteklammer (4) eine Aufnahme (6) für ein Befestigungselement (7) aufweist.

4. Kartenhalter (1) nach einem derAnsprüche 1 bis 3, **dadurch gekennzeichnet, dass** die Kanten (8c, 8d) mit wenigstens einem Rastelement (9, 10) versehen sind, mit dem die Halteklammer (4) verrastet ist.

5. Kartenhalter (1) nach einem der Ansprüche 1 bis 4, **dadurch gekennzeichnet, dass** die Halteklammer (4) mit zwei aufeinander zu gerichteten Rastelementen (4c, 4d) versehen ist, welche sich jeweils mit einer der Kanten (8c, 8d) im Eingriff befinden.

6. Kartenhalter (1) nach einem der Ansprüche 1 bis 5, **dadurch gekennzeichnet, dass** die Halteklammer (4) auf an die Kanten (8c, 8d) angrenzenden Seitenwandabschnitten (2b, 3b) der Hülle (8) aufliegt.

7. Kartenhalter (1) nach Anspruch 6, **dadurch gekennzeichnet, dass** die Seitenwandabschnitte (2b, 3b) an die Kanten (8c, 8d) angrenzende, sich im Wesentlichen quer zu einer Kartenebene (C, C1, C2) erstreckende Stützflächen (19) ausbilden, auf denen die Halteklammer (4) aufliegt.

8. Kartenhalter (1) nach Anspruch 6 oder 7, **dadurch gekennzeichnet, dass** wenigstens ein Seitenwandabschnitt (2b, 3b) wenigstens ein Dickenausgleichselement (2f, 3f) aufweist, das eine Stützfläche (19) ausbildet.

9. Kartenhalter (1) nach einem der Ansprüche 1 bis 8, **gekennzeichnet durch** ein durch den Informationsträger (18) elastisch auslenkbares, in den Aufnahmeschacht (15) ragendes Sicherungsorgan (5).

10. Kartenhalter (1) nach Anspruch 9, **dadurch gekennzeichnet, dass** das Sicherungsorgan (5) in die Hülle (8) eingesetzt ist.

11. Kartenhalter (1) nach Anspruch 9 oder 10, **dadurch gekennzeichnet, dass** das Sicherungsorgan (5) aus einem Elastomer gefertigt ist.

12. Kartenhalter (1) nach einem der Ansprüche 9 bis 11, **dadurch gekennzeichnet, dass** die Halteklammer (4) das Sicherungsorgan (5) abdeckt.

13. Kartenhalter (1) nach einem der Ansprüche 1 bis 12, **dadurch gekennzeichnet, dass** die Hülle (8) von wenigstens zwei Seitenwandelementen (2, 3) gebildet ist.

14. Kartenhalter (1) nach Anspruch 13, **gekennzeichnet durch** wenigstens ein Zwischenwandelement (13), das zwischen den Seitenwandelementen (2, 3) angeordnet ist, wobei sich jeweils ein Aufnahmeschacht (15) zwischen dem Zwischenwandelement (13) und einem der Seitenwandelemente (2, 3) befindet.

15. Kartenhalter (1) nach einem der Ansprüche 1 bis 14, **dadurch gekennzeichnet, dass** der Kartenhalter (1) als ein Baukasten (20) zum wahlweisen Zusammenbau des Kartenhalters (1) mit einem oder zwei Aufnahmeschächten (15) mit jeweils einer entgegen der Einschubrichtung (E) weisenden Aufnahmeöffnung (16), mit wenigstens zwei Seitenwandelementen (2, 3) zur Bildung des wenigstens einen Aufnahmeschachtes (15) und mit der Halteklammer (4) mit einer Aufnahme (4h) für jeweils nicht mehr als zwei Kanten (2c, 2d, 3c, 3d) der Seitenwandelemente (2, 3) ausgebildet ist.

## Claims

1. A card holder (1) having a sleeve (8), which comprises at least one receiving slot (15) with a receiving opening (16) facing counter to an insertion direction (E) for receiving at least one card-shaped information carrier (18) in the insertion direction (E), **wherein** a retaining clip (4), which extends over no more than two edges (8c, 8d) of the sleeve (8), is snap-fitted to the sleeve (8), **characterised in that** the retaining clip (4) is angular or Y-shaped and overlaps a corner (8a) of the sleeve (8) along both edges (8c, 8d) next to the corner (8a).

2. The card holder (1) according to Claim 1, **characterised in that** the retaining clip (4) and the sleeve (8) are produced from different materials.

3. The card holder (1) according to Claim 1 or 2, **characterised in that** the retaining clip (4) has a receiving means (6) for a fastening element (7).

4. The card holder (1) according to any one of Claims 1 to 3, **characterised in that** the edges (8c, 8d) are provided with at least one snap-fit element (9, 10) with which the retaining clip (4) is snap-fitted.

5. The card holder (1) according to any one of Claims 1 to 4, **characterised in that** the retaining clip (4) is provided with two snap-fit elements (4c, 4d), which are directed towards each other and are each in engagement with one of the edges (8c, 8d).

6. The card holder (1) according to any one of Claims 1 to 5, **characterised in that** the retaining clip (4) rests on side wall sections (2b, 3b) of the sleeve (8) which are next to the edges (8c, 8d).

7. The card holder (1) according to Claim 6, **characterised in that** the side wall sections (2b, 3b) form supporting faces (19), which are next to the edges (8c, 8d), extend substantially transversely to a card plane (C, C1, C2) and on which the retaining clip (4) rests.

8. The card holder (1) according to Claim 6 or 7, **characterised in that** at least one side wall section (2b, 3b) has at least one thickness equalisation element (2f, 31), which forms a supporting face (19).

9. The card holder (1) according to any one of Claims 1 to 8, **characterised by** a retaining means (5), which can be elastically deflected by the information carrier (18) and extends into the receiving slot (15).

10. The card holder (1) according to Claim 9, **characterised in that** the retaining means safety device (5) is inserted into the sleeve (8).

11. The card holder (1) according to Claim 9 or 10, **characterised in that** the retaining meanssafety device (5) is produced from an elastomer.

12. The card holder (1) according to any one of Claims 9 to 11, **characterised in that** the retaining clip (4) covers the retaining means (5).

13. The card holder (1) according to any one of Claims 1 to 12, **characterised in that** the sleeve (8) is formed by at least two side wall elements (2, 3).

14. The card holder (1) according Claim 13, **characterised by** at least one intermediate wall element (13), which is arranged between the side wall elements (2, 3), wherein one receiving slot (15) is situated in each case between the intermediate wall element (13) and one of the side wall elements (2, 3).

15. The card holder (1) according to any one of Claims 1 to 14, **characterised in that** the card holder (1) is in the form of a construction kit (20) for optionally assembling the card holder (1) with one or two receiving slots (15), each with a receiving opening (16) facing counter to the insertion direction (E), having at least two side wall elements (2, 3) for forming the at least one receiving slot (15), and having the retaining clip (4) with a receptacle (4h) for in each case no more than two edges (2c, 2d, 3c, 3d) of the side wall elements (2, 3).

## Revendications

1. Porte-carte (1) avec un étui (8) qui comprend au moins un logement creux (15) avec une ouverture de logement (16) dirigée à l'encontre d'une direction d'insertion (E), destiné à recevoir au moins un support d'informations (18) en forme de carte dans la direction d'insertion (E), un crampon de retenue (4) qui est enclenché avec l'étui (8) ne s'étendant pas sur plus de deux arêtes (8c, 8d) de l'étui (8), **caractérisé en ce que** le crampon de retenue (4) est conçu de forme angulaire ou en forme de Y et chevauche un coin (8a) de l'étui (8) sur les deux arêtes (8c, 8d) adjacentes au coin (8a).

2. Porte-carte (1) selon la revendication 1, **caractérisé en ce que** le crampon de retenue (4) et l'étui (8) sont fabriqués dans des matières différentes.

3. Porte-carte (1) selon la revendication 1 ou 2, **caractérisé en ce que** le crampon de retenue (4) comporte un réceptacle (6) pour un élément de fixation (7).

4. Porte-carte (1) selon l'une quelconque des revendications 1 à 3, **caractérisé en ce que** les arêtes (8c, 8d) sont munies d'au moins un élément d'enclenchement (9, 10) avec lequel le crampon de retenue (4) est enclenché.

5. Porte-carte (1) selon l'une quelconque des revendications 1 à 4, **caractérisé en ce que** le crampon de retenue (4) est muni de deux éléments d'enclenchement (4c, 4d) dirigés l'un vers l'autre, qui se trouvent respectivement en engagement avec l'une des arêtes (8c, 8d).

6. Porte-carte (1) selon l'une quelconque des revendications 1 à 5, **caractérisé en ce que** le crampon de retenue (4) repose sur des segments de paroi latérale (2, 3b) de l'étui (8) qui sont adjacents aux arêtes (8c, 8d).

7. Porte-carte (1) selon la revendication 6, **caractérisé en ce que** les segments de paroi latérale (2b, 3b) forment des surfaces d'appui (19) adjacentes aux arêtes (8c, 8d), s'étendant sensiblement à la transversale d'un plan de la carte (C, C1, C2), sur lesquelles repose le crampon de retenue (4).

8. Porte-carte (1) selon la revendication 6 ou 7, **caractérisé en ce qu'**au moins un segment de paroi latérale (2b, 3b) comporte au moins un élément compensateur d'épaisseur (2f, 31) qui forme une surface d'appui (19).

9. Porte-carte (1) selon l'une quelconque des revendications 1 à 8, **caractérisé par** un organe de sécurité (5) faisant dévier élastiquement le support d'informations (18), saillant dans le logement creux (15).

10. Porte-carte (1) selon la revendication 9, **caractérisé en ce que** l'organe de sécurité (5) est inséré dans l'étui (8).

11. Porte-carte (1) selon la revendication 9 ou 10, **caractérisé en ce que** l'organe de sécurité (5) est fabriqué en un élastomère.

12. Porte-carte (1) selon l'une quelconque des revendications 9 à 11, **caractérisé en ce que** le crampon de retenue (4) recouvre l'organe de sécurité (5).

13. Porte-carte (1) selon l'une quelconque des revendications 1 à 12, **caractérisé en ce que** l'étui (8) est formé par au moins deux éléments de paroi latérale (2, 3).

14. Porte-carte (1) selon la revendication 13, **caractérisé par** au moins un élément de paroi intermédiaire (13) qui est placé entre les éléments de paroi latérale (2, 3), chaque fois un logement creux (15) se trouvant entre l'élément de paroi intermédiaire (13) et l'un des éléments de paroi latérale (2, 3).

15. Porte-carte (1) selon l'une quelconque des revendications 1 à 14, **caractérisé en ce que** le porte-carte (1) est conçu sous la forme d'un kit de construction (20) pour l'assemblage au choix du porte-carte (1) avec un ou deux logements creux (15), avec chacun une ouverture de logement (16) dirigée à l'encontre de la direction d'insertion (E), avec au moins deux éléments de paroi latérale (2, 3) pour former l'au moins un logement creux (15) et avec le crampon de retenue (4) avec un réceptacle (4h) pour chaque fois pas plus de deux arêtes (2c, 2d, 3c, 3d) des éléments de paroi latérale (2, 3).
